# EUROPEAN PATENT SPECIFICATION

(11) **EP 3 291 061 B1**
(45) Date of publication and mention of the grant of the patent: **22.07.2020**
(21) Application number: 17188625.2
(22) Date of filing: 30.08.2017
(51) Int. Cl.: G06F 3/01, G06F 3/038

(54) **VIRTUAL REALITY CONTROL METHOD, APPARATUS AND ELECTRONIC EQUIPMENT**
VERFAHREN, VORRICHTUNG UND ELEKTRONISCHE AUSRÜSTUNG ZUR STEUERUNG VON VIRTUELLER REALITÄT
PROCÉDÉ DE COMMANDE DE RÉALITÉ VIRTUELLE, APPAREIL ET ÉQUIPEMENT ÉLECTRONIQUE

(30) Priority: 30.08.2016 WO PCT/CN2016/097418
(43) Date of publication of application: 07.03.2018
(73) Proprietor: Beijing Xiaomi Mobile Software Co., Ltd., Beijing 100085 (CN)
(72) Inventor: LI, Zheng, Beijing, 100085 (CN); LIN, Xingsheng, Beijing, 100085 (CN); WANG, Xuanran, Beijing, 100085 (CN)
(74) Representative: Kudlek, Franz Thomas

(56) References cited:
- US-A1- 2015 193 018
- US-A1- 2015 220 142
- US-B1- 8 947 323

## Description

### TECHNICAL FIELD

The present disclosure relates to the field of virtual reality, and particularly to a virtual reality control method, apparatus and electronic equipment.

### BACKGROUND

In the related art, interactions between a VR device and a mobile phone are usually controlled with handles of VR devices. For example, the user triggers the VR device by pressing buttons on the touch handle, such as, up, down, left, right, enter and so on. However, when the user is wearing the VR device, since his/her eyes have been blocked by the display of the VR device, the user can only feel the buttons by touch, without seeing them with eyes. In this situation, the user may press wrong buttons, and thus it may be very inconvenient for the users.
US 2015/220142 A1 discloses a method of providing hands-free movement of object on a display of a headset computer (HSC) having head-tracking control, including moving, with the head-tracking control, a cursor within the display until the cursor at least partially overlaps an object within the display, wherein sensors can be integrated into an HSC and used to track the user's head movements to provide user input commands, wherein the user can issue a voice command through a microphone and the cursor control software responsively anchors the object to the pointer, wherein the user can issue another voice command, and the cursor control software fixes the object in the new location, wherein a HMD includes head-tracking capability. Head-tracking data may be captured from an accelerometer. With head-tracking enabled, a pointer is displayed on a screen, when this function is activated. This pointer responds to head-tracking. If the user moves his head to the left, the pointer moves to the left on the screen, and vice-versa. The anchoring renders the object movable in accordance with the head-tracking movements. The user can then position the object in a new place.
US 8 947 323 B1 discloses the use of wearable displays, which include applications in which users interact in real time with an augmented reality as a computer-implemented method. The wearable computer may receive head-movement data from a sensor. UI-Targeted movements may be made in a three-dimensional space. The first activity may correspond to an activity after the wearer has interacted with the wearable computer to manually record the activity, e.g. by pushing a button on the wearable computer. One or more sensors may be associated with a wearable computer and may be used to determine UI-targeted movement data. UI-targeted movements may be made in a three-dimensionale space. A wearer may make a UI-targeted head movement in accordance with a predetermined head movement for panning, browsing, paginating, and/or scrolling content in the graphic display.
US 2015/193018 A1 discloses embodiments that relate to positioning a target indicator via a display system. For example, one embodiment provides a method for positioning a target indicator using gaze tracking data having a coarse accuracy from a gaze tracking system of a computing device. Head pose data having a fine accuracy greater than the coarse accuracy is received from a head tracking system. Using the gaze tracking data, an approximate user gaze region within a display region is determined, and the target indicator is displayed at an initial location within the approximate user gaze region. A reposition input from the user is received. In response, subsequently received head pose data is used to calculate an adjusted location for the target indicator. The target indicator is then displayed at the adjusted location.

### SUMMARY

In order to overcome the problems in the related art, in embodiments of the present disclosure, it is provided a VR control method, apparatus and electronic equipment for improving the convenience of operating the VR devices.

According to a first aspect of the present disclosure, it is provided a virtual reality (VR) control method comprising:
Acquiring sensor data indicative of a movement of a VR wearable device in three-dimensional space within a set time period, and the set time period is determined by a first time point at which a first control instruction is received and a second time point at which a second control instruction is received;
determining a moving trajectory of the VR wearable device within the set time period based on the sensor data within the set time period; and
controlling a VR execution device to perform operations corresponding to the moving trajectory and to display operation effects corresponding to the moving trajectory on the VR display device, wherein said acquiring sensor data indicative of a movement of a VR wearable device in three-dimensional space within a set time period includes:
   upon receipt of the first control instruction from a touch handle with buttons bounded to the VR wearable device, acquiring the sensor data indicative of the movement of the VR wearable device in the three-dimensional space from a first gyro sensor of the electronic device; and
   upon receipt of the second control instruction from the handle, stopping acquiring sensor data from the first gyro sensor, and the acquisition of the sensor data within the preset period of time being completed..

In one embodiment, said determining a moving trajectory of the VR wearable device within the set time period based on the sensor data within the set time period may include:
determining a moving direction in which the VR wearable device moves in the three-dimensional space based on sensor data within the set time period; and
rendering the moving trajectory of the VR wearable device on the VR display device based on the sensor data within the set time period in the direction chronologically.

In one embodiment, said rendering the moving trajectory of the VR wearable device on the VR display device based on the sensor data within the set time period in the direction chronologically may include:
at the first time point, rendering a graphical representation of a first set of sensor data among the sensor data within the set time period in a central region of the VR display device;
rendering the moving trajectory corresponding to the sensor data within the set time period chronologically along the direction; and
at the second time point, rendering the last set of sensor data among the sensor data within the set time period in the central region of the VR display device, and said rendering the moving trajectory of the VR wearable device is completed.

In one embodiment, said controlling a VR execution device to perform operations corresponding to the moving trajectory and to display operation effects corresponding to the moving trajectory on the VR display device may include:
determining whether there is a target trajectory from a plurality of reference trajectories matching the shape of the moving trajectory from a plurality of reference trajectories corresponding to an operation instruction for controlling the VR execution device;
determining an operation instruction corresponding to the target trajectory; and
controlling the VR execution device to perform an operation corresponding to the operation instruction.

In one embodiment, the method may further includes:
generating a message for prompting to move the VR wearable device if it is determined that there isn't a target trajectory from the plurality of reference trajectories; and
clearing the sensor data within the set time period.

In one embodiment, said acquiring sensor data indicative of a movement of a VR wearable device in three-dimensional space within a set time period may include:
generating the first control instruction and determining the first time point at which the first control instruction is generated, when it is detected that a predetermined button on the VR wearable device is triggered;
acquiring the sensor data indicative of the movement of the VR wearable device in three-dimensional space which is collected by the second gyro of the VR wearable device according to the first control instruction;
generating the second control instruction and determining the second time point at which the second control instruction is generated, when it is detected that the predetermined button is triggered again; and
stopping acquiring the sensor data from the second gyro sensor according to the second control instruction, and completing the acquisition of the sensor data within the set time period.

According to a second aspect of the present disclosure, it is provided a virtual reality (VR) control apparatus comprising:
a data acquisition module configured to acquire sensor data within a set time period in which a VR wearable device is moved in three-dimensional space, and the set time period is determined by a first time point at which a first control instruction is received and a second time point at which a second control instruction is received;
a trajectory determination module configured to determine a moving trajectory of the VR wearable device within the set time period based on the sensor data within the set time period; and
an operation control module configured to control a VR execution device to perform operations corresponding to the moving trajectory and to display operation effects corresponding to the moving trajectory on the VR display device, wherein said data acquisition module includes:
   a first acquisition sub-module configured to acquire the sensor data indicative of a movement of the VR wearable device in the three-dimensional space from a first gyro sensor of the electronic device, upon receipt of the first control instruction from a touch handle with buttons bound to the VR wearable device;
   a first stop sub-module configured to, upon receipt of the second control instruction from the handle, stop acquiring sensor data from the first gyro sensor and the acquisition of the sensor data within the preset period of time is completed.

In one embodiment, said trajectory determination module may include:
a direction determination module configured to determine a moving direction in which the VR wearable device moves in the three-dimensional space based on sensor data within the set time period; and
a trajectory rendering sub-module configured to render the moving trajectory of the VR wearable device on the VR display device based on the sensor data within the set time period in the direction chronologically.

In one embodiment, said trajectory rendering sub-module may is configured to:
at the first time point, render a graphical representation of a first set of sensor data among the sensor data within the set time period in a central region of the VR display device;
render the moving trajectory corresponding to the sensor data within the set time period chronologically along the direction;
at the second time point, render the last set of sensor data among the sensor data within the set time period in the central region of the VR display device, and said rendering the moving trajectory of the VR wearable device is completed.

In one embodiment, said operation control module may include:
a target trajectory determination sub-module configured to determine a target trajectory from a plurality of reference trajectories matching the shape of the moving trajectory from a plurality of reference trajectories corresponding to an operation instruction for controlling the VR execution device;
an operation instruction determination sub-module configured to determine an operation instruction corresponding to the target trajectory; and
an operation execution sub-module configured to control the VR execution device to perform an operation corresponding to the operation instruction.

In one embodiment, the device may further includes:
a prompt message generation module configured to generate a message for prompting to move the VR wearable device if it is determined that there isn't a target trajectory from the plurality of reference trajectories; and
a data clearance module configured to clear the sensor data within the set time period.

In one embodiment, said data acquisition module may include:
a first instruction generation sub-module configured to generate the first control instruction and determining the first time point at which the first control instruction is generated, when it is detected that a predetermined button on the VR wearable device is triggered;
a second acquisition sub-module configured to acquire the sensor data of the VR wearable device moving in three-dimensional space which is captured by the second gyroscope of the VR wearable device according to the first control instruction;
a second instruction generation sub-module configured to generate the second control instruction and determining the second time point at which the second control instruction is generated, when it is detected that the predetermined button is triggered again; and
a second stop sub-module configured to stop acquiring the sensor data from the second gyro sensor according to the second control instruction, so as to complete the acquisition of the sensor data within the set time period.

According to a third aspect of the present disclosure, it is provided an electronic equipment comprising:
a processor, and
a memory configured to store instructions that can be executed by the processor,
wherein the processor is configured to:
acquire sensor data within a set time period in which a VR wearable device is moved in three-dimensional space, and the set time period is determined by a first time point at which a first control instruction is received and a second time point at which a second control instruction is received;
determine a moving trajectory of the VR wearable device within the set time period based on the sensor data within the set time period; and
control a VR execution device to perform operations corresponding to the moving trajectory and to display operation effects corresponding to the moving trajectory on the VR display device.

The technical solution provided by the embodiments of the present disclosure may have the following advantageous effects:
By determining the moving trajectory of the VR wearable device within the set time period based on the sensor data within the set time period, and by controlling the VR execution device to perform operations corresponding to the moving trajectory and display the operation effects corresponding to the moving trajectory on the VR display device, the operations of the VR execution device can be controlled based on the body actions detected from the sensor data, and prevent the user from manually pressing different buttons on the handle to trigger different operation, and thereby ensure that the VR execution device can perform the action that the user really wants, and display the moving trajectory corresponding to the operation visual effects with the VR display device, so as to improve the variety of the VR execution device input modes and facilitate interactions between the user and the VR display device.

By displaying the moving trajectory on the VR display device, the user wearing the VR wearable device can visually perceive the trajectory that he moves the VR wearable device. When the moving trajectory does not coincide with the reference trajectory, the user can adjust the direction that he moves the VR wearable device, to improve the user's experience of using the VR wearable equipment.

By sequentially rendering the sensor data within the set time period at the black dot on the VR display device, the user can visually feel like the instruction control process and the acceleration data display process fit with each other on real-time, and thereby the Immersion feeling caused by the VR display device can be enhanced.

It is possible to ensure that the user can accurately control the VR execution device by prompting the user to move the VR wear device once again. By clearing the sensor data within the set time period, it is possible to prevent the electronic device or the VR execution device from storing too much useless data and improving the storage space utilization rate.

It is to be understood that the foregoing general description and the following detailed description are exemplary and explanatory only, and do not limit the scope of the present disclosure in any way.

### BRIEF DESCRIPTION OF THE DRAWINGS

The drawings herein are incorporated in and constitute a part of this specification, showing embodiments of this disclosure and, together with the description, serve to explain the principles of the present disclosure.
Figure 1A is a schematic flow chart of a VR control method according to an exemplary embodiment.
FIG. 1B is a first exemplary scenario of a VR control method according to an exemplary embodiment.
FIG. 1C is a second exemplary scenario of a VR control method according to an exemplary embodiment.
Figure 2A is a schematic flow chart of a VR control method according to an exemplary embodiment.
Figure 2B is a flow chart of step 203 in accordance with the embodiment shown in FIG. 2A.
Figure 3 is a schematic flow chart of a VR control method according to a second exemplary embodiment.
Figure 4 is a schematic flow chart of a VR control method according to a third exemplary embodiment.
Figure 5 is a structural diagram of a VR control apparatus according to an exemplary embodiment.
Figure 6 is a structural diagram of another VR control apparatus in accordance with an exemplary embodiment.
Figure 7 is a structural diagram of a further VR control apparatus according to an exemplary embodiment.
Figure 8 is a block diagram of another device that is suitable for controlling a VR device according to an exemplary embodiment.

### DETAILED DESCRIPTION

Hereinafter, an exemplary embodiment will be described in details, examples of which are shown in the drawings. In the following description, when referring to the drawings, the same numerals in the different drawings denote the same or similar elements unless otherwise indicated. The embodiments described in the following exemplary embodiments are not representative of all embodiments that comply with the principle of the present disclosure. Rather, they are merely examples of devices and methods that comply with some aspects of the present disclosure which have been described in details in the appended claims.

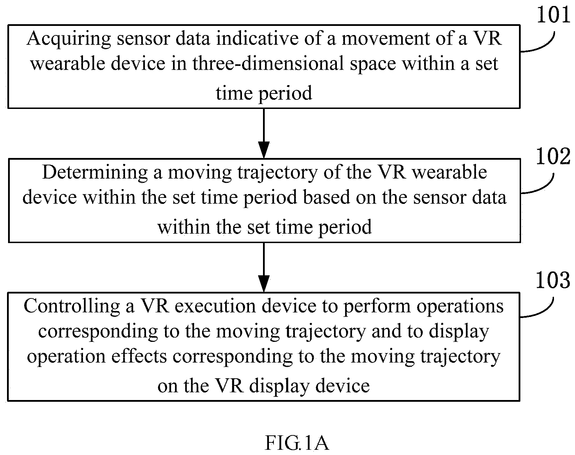

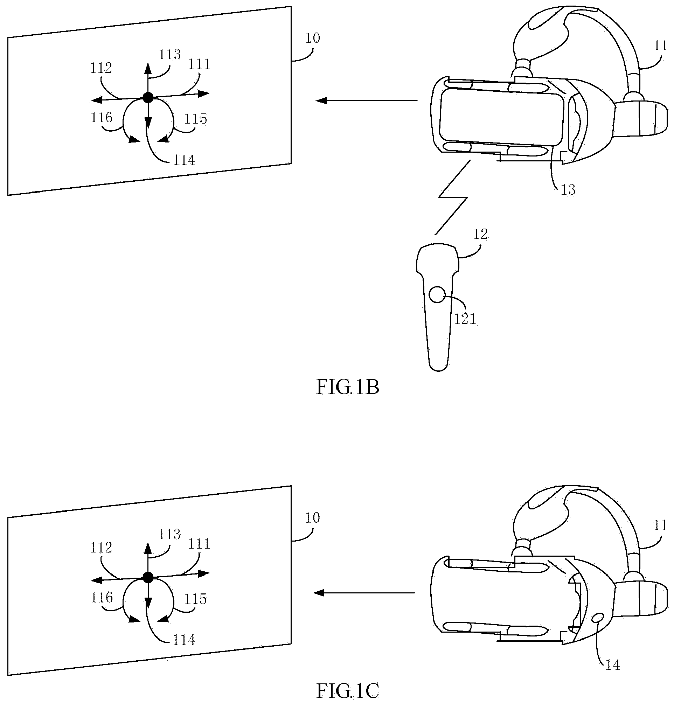

FIG. 1A is a schematic flow chart of a VR control method according to an exemplary embodiment, FIG. 1B is a first scene diagram of a VR control method according to an exemplary embodiment, and FIG. 1C is a second scene diagram of a VR control method according to an exemplary embodiment. The VR control method can be applied to an electronic device (e.g., a smart phone, a tablet PC, a personal computer, a VR device). As shown in FIG. 1A, and the VR control method includes the following steps 101-103:

In step 101, acquiring sensor data indicative of a movement of a VR wearable device in three-dimensional space within a set time period, and the set time period is determined by a first time point at which a first control instruction is received and a second time point at which a second control instruction is received.

In one embodiment, the sensor data may be the rotational angular acceleration collected by a gyro sensor or the three-axial acceleration data collected by a acceleration sensor. The moving trajectory of the VR wearable device can be identified from the distribution of the sensor data over the preset period of time. At that time, the VR wearable device is worn by the user at the head. In one embodiment, the first control instruction and the second control instruction may either be triggered by pressing a button on the handle bound with the VR wearable device or may be triggered by pressing a predetermined button on the VR wearable device itself.

The method further includes, in step 102, determining a moving trajectory of the VR wearable device within the set time period based on the sensor data within the set time period.

In one embodiment, during the set time period, the user may control the VR execution device according to the instructions to move the VR execution device as needed. For example, the user tilts the head to the right and then to the left, raises the head upwards and bows the head down, and turns the head to the right side and then to the left side, and so on, while the body remains stationary. The above movements can be identified based on the sensor data collected by the sensor.

In step S103, the method proceeds to control a VR execution device to perform operations corresponding to the moving trajectory and to display operation effects corresponding to the moving trajectory on the VR display device.

In one embodiment, the moving trajectory and the corresponding operation may be set by the users according to their operating habits. For example, bowing the head downward indicates a "confirm" operation, raising head upward indicates a "return" operation, tilting the head to the right side indicates a "slide-to-the-right" operation, and tilting the head to the left indicates a "slide-to-the-left" operation and so on.

In one exemplary scenario, as shown in Fig.1B, the VR wearable device 11 itself is provided with a sensor. The handle 12 is bound to the VR wearable device 11. The electronic equipment 13 can be clamped on the VR wearable device 11, as a VR display device which is bounded to the VR wearable device 11, and at the same time, the electronic equipment 13 can implement the method flow described in this disclosure as a VR execution device. When the user is wearing the VR wearable device 11, the user can send a DownEvent trigger event (i.e., a first control instruction) to the electronic equipment 13 by triggering the button 121 on the handhold handle 12, and the button 121 sends the DownEvent trigger event to the electronic equipment 13 via Bluetooth communication if the user needs to perform the "slide-to-the-left" operation. The electronic device 13, upon receiving the DownEvent trigger event, acquires sensor data from the VR wearable device 11. When the user releases the button 121, the button 121 sends an UpEvent trigger event (i.e., a second control instruction) via the Bluetooth communication to the electronic equipment 13. The electronic equipment 13 determines a moving trajectory of the VR wearable device 11 based on the sensor data within a set time period between the time point of receiving the first control instruction and that of receiving the second control instruction. For example, as to the moving trajectory 112 as shown in Fig. 1B, the electronic equipment 13 performs a slide-to-the-left operation corresponding to the moving trajectory 112. Alternatively, the electronic device 13 may be, e.g., a personal computer, and in this situation, the VR display device may be a display screen provided with the VR wearable device 11.

In another exemplary scenario as shown in Fig. 1C, the VR wearable device 11 is provided with a sensor and a display screen. The handle 12, shown in Fig. 1B, is bound to the VR wearable device 11. The VR wearable device 11, the VR execution device and the VR display device are an integral structure which forms a helmet, where the VR wearable device 11 may implement the process flow described in this disclosure. When the user is wearing the VR wearable device 11, the user can trigger the predetermined button 14 on the VR wearable device 11 if the user needs to perform the "slide-to-the-left" operation. The VR wearable device 11 detects the predetermined button 14 is triggered (the trigger event can be regarded as the first control instruction described in the present disclosure), and the moving trajectory of the VR wearable device 11 is recognized based on the sensor data acquired by itself. When the user releases the predetermined button 14, the VR wearable device 11 may detect a release trigger event (which may be considered as the second control instruction as described in this disclosure), and then the VR wearable device 11 can determine the moving trajectory of the VR wearable device 11 in the set time period based on the sensor data, where the set time period is between the time point at which receives the first control instruction and the time point at which receiving the second control instruction. For example, as to the trajectory 112 as shown in Fig. 1C, the VR wearable device 11 is controlled to perform the slide-to-the-left operation corresponding to the moving trajectory 112.

In the above-described Figs. 1B and 1C, reference numeral 10 may be regarded as a display screen on the electronic device 13 used by a user or a display screen of the VR wearable device 11. In the present disclosure, for convenience of description, the box shown in reference numeral 10 is referred to as equivalent screen 10. The equivalent screen 10 is only an example provided for the purpose of explaining the content that is displayed on the display screen on the electronic device 13 or the display screen of the VR wearable device 11. During the movement of the VR wearable device 11, for example, the reference numeral 111 may represent a moving trajectory of the user whose body remains stationary and the head tilts to the right, which indicates an "slide-to-the-right" operation; the reference numeral 112 may represent a moving trajectory of the user whose body keeps stationary and the heard tilts to the left, which indicates an "slide-to-the-left" operation; the reference numeral 113 may represent a moving trajectory of the user whose body remains stationary and face is raised upward, which indicates a "return" operation; the reference numeral 114 may represent a moving trajectory of the user whose head is bowed downwards, which indicates a "confirm" operation; and the reference numeral 115 may represent a moving trajectory of the user whose body remains stationary and the face is turned to the right side, which indicates a operation of "turning the page to the right"; and the reference numeral 116 may represent a moving trajectory of the user whose body remains stationary and the face is turned to the left to rotate the head, which indicates a operation of "turning the page to the left". It will be appreciated by those skilled in the art that in each operation of the user, only the moving trajectory coinciding with this operation is displayed on the equivalent screen 10. The plurality of moving trajectories shown in Figs. 1B and 1C are examples of different moving trajectories corresponding to different operations, which should not be considered as limitations to the present disclosure.

In the present embodiment, by determining the moving trajectory of the VR wearable device in the set time period based on the sensor data within the set time period, controlling the VR execution device to perform an operation corresponding to the moving trajectory and displaying operation effects corresponding to the moving trajectory on the VR display device, the user can trigger different buttons on the handle to achieve different operations with body actions, so as to ensure that the VR execution device can perform the actions that the user really wants. By displaying the visual effects corresponding to the moving trajectories on the VR display device, the diversity of the input modes of the VR execution device is improved and the interaction between the user and the VR display device is facilitated.

In one embodiment, said determining a moving trajectory of the VR wearable device within the set time period based on the sensor data within the set time period may include:
determining a moving direction in which the VR wearable device moves in the three-dimensional space based on sensor data within the set time period; and
rendering the moving trajectory of the VR wearable device on the VR display device based on the sensor data within the set time period in the direction chronologically.

In one embodiment, said rendering the moving trajectory of the VR wearable device on the VR display device based on the sensor data within the set time period in the direction chronologically may include:
at the first time point, rendering a first set of sensor data among the sensor data within the set time period in a central region of the VR display device;
rendering the moving trajectory corresponding to the sensor data within the set time period chronologically along the direction; and
at the second time point, rendering the last set of sensor data among the sensor data within the set time period in the central region of the VR display device, and said rendering the moving trajectory of the VR wearable device is completed.

In one embodiment, said controlling a VR execution device to perform operations corresponding to the moving trajectory may include:
determining whether there is a target trajectory matching the shape of the moving trajectory from a plurality of reference trajectories corresponding to an operation instruction for controlling the VR execution device;
determining an operation instruction corresponding to the target trajectory; and
controlling the VR execution device to perform an operation corresponding to the operation instruction.

In one embodiment, the method may further includes:
generating a message for prompting to move the VR wearable device if it is determined that there isn't a target trajectory from the plurality of reference trajectories; and
clearing the sensor data within the set time period.

In one embodiment, said sensor data indicative of a movement of a VR wearable device in three-dimensional space within a set time period may include:
acquiring the sensor data indicative of the movement indicating a movement of the VR wearable device in the three-dimensional space from a first gyro sensor of the electronic device, upon receipt of the first control instruction from the handle bounded to the VR wearable device; and
upon receipt of the second control instruction from the handle, stopping acquiring sensor data from the first gyro sensor, so as to complete the acquisition of the sensor data within the preset period of time.

In one embodiment, said acquiring sensor data indicative of a movement of a VR wearable device in three-dimensional space within a set time period may include:
generating the first control instruction and determining the first time point at which the first control instruction is generated, when it is detected that a predetermined button on the VR wearable device is triggered;
acquiring the sensor data indicative of the movement of the VR wearable device in three-dimensional space which is captured by the second gyroscope of the VR wearable device according to the first control instruction;
generating the second control instruction and determining the second time point at which the second control instruction is generated, when it is detected that the predetermined button is triggered again; and
stopping acquiring the sensor data from the second gyro sensor according to the second control instruction, and completing the acquisition of the sensor data within the set time period.

The subsequent embodiments are provided to explain how to acquire the sensor data.

By means of the above method disclosed in the embodiments of the present disclosure, body actions can be detected so as to control the operation of the VR execution device, and prevent the user from manually pressing different buttons on the handle to trigger different operation, and thereby ensure that the VR execution device can perform the action that the user really wants, to improve the variety of the VR execution device input modes and facilitate interactions between the user and the VR display device.

Hereinafter, the technical solution provided in the embodiments of the present disclosure will be explained in details with reference to examples.

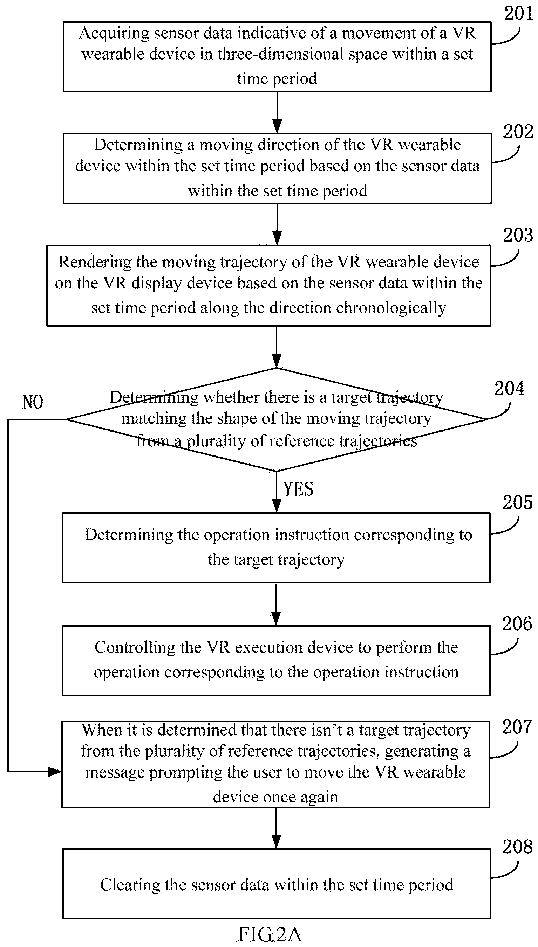

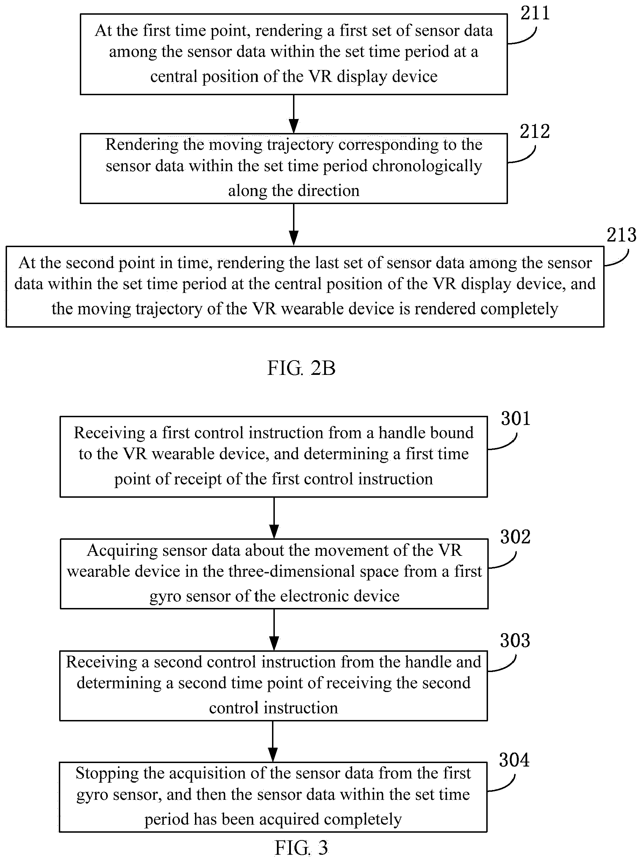

Figure 2A is a schematic flow chart of a VR control method according to a first exemplary embodiment. Figure 2B is a flow chart of step 203 in accordance with the embodiment shown in FIG. 2A. In the first embodiment, the above-described method provided by the embodiments of the present disclosure will be further described. An exemplary explanation of how the moving trajectory is rendered on the VR display device will be provided as an example with reference to Figs. 1B and 1C. As shown in Fig. 2A, the method includes:

In step 201, acquiring sensor data indicative of a movement of a VR wearable device in three-dimensional space within a set time period, and the set time period is determined by a first time point at which a first control instruction is received and a second time point at which a second control instruction is received.

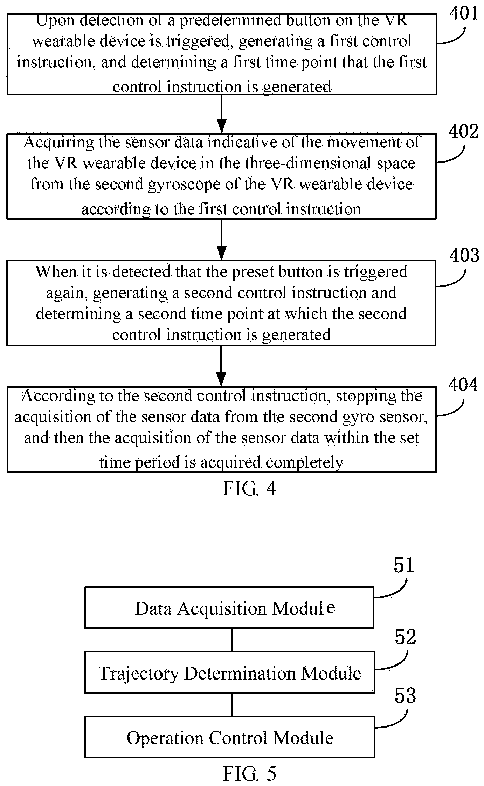

With respect to the details of step 201, please refer to the descriptions about Fig.1A as discussed above or the descriptions about the embodiments as shown inFig.3 or Fig.4 that will be provided hereinafter, and thus details of that step will be omitted here.

As step 202, a moving direction of the VR wearable device within the set time period is determined based on the sensor data within the set time period.

In one embodiment, In one embodiment, descriptions will be provide with angular acceleration in six directions collected by a gyro sensor as an example of the sensor data. In one embodiment, by converting the values of the angular acceleration in the six directions into quaternion, the posture of the VR wearable device in the three-dimensional space is calculated from the quaternion, and the moving direction of the VR wearable device in the three-dimensional space is further determined based on the posture. How to calculate the posture of the VR wearable device in the three-dimensional space from the quaternion may be referred to the description of the related art, details of which are omitted in this disclosure.

In step 203, the moving trajectory of the VR wearable device is rendered on the VR display device based on the sensor data within the set time period along the direction chronologically.

Details of step 203 may be referred to the following description as to Fig.2B, and will be omitted here.

In step 204, it is determined whether there is a target trajectory matching the shape of the moving trajectory from a plurality of reference trajectories, where each of the plurality of the reference trajectories corresponds to an operation instruction for controlling the VR execution device, if yes, the method proceeds to step 205; and if no, the method proceeds to step 207.

In one embodiment, for example, a plurality of reference trajectories are displayed on the equivalent screen 10 as shown in Figs. 1B and 1C, wherein each of the reference trajectories corresponds to a shape which may include a moving direction and a moving distance of the trajectory. Reference may be made to the related art as to the descriptions about trajectories, which are omitted here.

In step 205, an operation instruction corresponding to the target trajectory is determined.

In step 206, the VR execution device is controlled to perform an operation corresponding to the operation instruction.

In one embodiment, for example, when a moving trajectory matches the shape of the trajectory indicated by the reference numeral 111 as shown in Fig. 1B, the VR wearable device 11 is controlled to perform the "slide-to-the-right" operation because the trajectory 111 corresponds to the "slide-to-the-right" operation control instruction. In one embodiment, when the electronic equipment 13 executes the method in the present embodiment, the electronic equipment 13 may control the VR execution device to perform a "slide-to-the-right" operation, that is, the electronic equipment 13 performs the "slide-to-the-right" operation.

In step 207, when it is determined that there isn't a target trajectory from the plurality of reference trajectories, a message prompting the user to move the VR wearable device once again will be generated.

In step 208, the sensor data within the set time period is cleared.

For example, when the posture of the user wearing the VR wearable device 11 is not standard, it is possible that the shape of the moving trajectory cannot match the shape of any one of the plurality of reference trajectories. Therefore, it is necessary to inform the user to move the VR wearable device 11 once again. In one embodiment, the user may be prompted to move the VR wearable device 11 once again, by displaying a text message on the equivalent screen 10. In another embodiment, the user may be informed to move the VR wearable device 11 once again by playing audio.

By prompting the user to move the VR wearable device once again, it is possible to ensure that the user can accurately control the VR wearable device. By clearing the sensor data within the set time period, it is possible to prevent the electronic equipment or the VR wearable device from storing too much useless data, so as to improve utilization rate of the storage.

As shown in Fig. 2B, step 203 may include the following steps:

In step 211, at the first time point, rendering a first set of sensor data among the sensor data within the set time period in a central region of the VR display device.

For example, if the sensor has collected 100 sets of sensor data within a preset period of time, and each set of sensor data includes sensor data on each dimension, the first set of sensor data from among the 100 sets of sensor data can be rendered on the central region of the VR display device. For example, the user can visually see that the first set of sensor data is rendered at a black dot of the equivalent screen 10, where the black dot indicates the center position of the VR display device.

In step 212, the moving trajectory corresponding to the sensor data within the set time period is chronologically rendered along the direction.

In step 213, at the second time point, the last set of sensor data among the sensor data within the set time period is rendered in the central region of the VR display device, and said rendering the moving trajectory of the VR wearable device is completed.

In one embodiment, the first set of sensor data may be moved along the moving direction of the VR wearable device in sequence, sequentially displaying the second set of sensor data, the third set of sensor data at the black dot of the equivalent screen 10, until the second control instruction is received, the last set of sensor data is rendered at the black dot of the VR display device, allowing the user to visually have a feeling of real-time fit of the instruction control process and the acceleration data display process, so as to enhance the immersion caused by the VR wearable device. In an embodiment, the sensor data that coincides with the moving direction can be identified from the sensor data of the respective dimensions during the process of rendering the moving trajectory, so as to ensure that the trajectory moving on the VR display device is exactly the same as the moving direction the user.

In the present embodiment, the sensor data within the set time period is rendered as a moving trajectory of the VR wearable device chronologically, and the moving trajectory is displayed on the VR display device, allowing the user wearing the VR wearable apparatus to be able to visually perceive the moving trajectory of the VR wearable device. When the moving trajectory cannot match the reference trajectories, users can timely adjust the direction of the VR wearable device, so as to improve the user experience of the VR wearable device.

Figure 3 is a schematic flow chart of a VR control method according to a second exemplary embodiment. In the second embodiment, the above-described method provided by the embodiments of the present disclosure will be further described. An exemplary explanation of how to collect sensor data from a first gyro sensor of the electronic equipment will be provided as an example with reference to Fig. 1B. As shown in Fig.3, the method includes:

In step 301, a first control instruction is received from a handle bound to the VR wearable device, and a first time point of receipt of the first control instruction is determined.

In step 302, sensor data about the movement of the VR wearable device in the three-dimensional space is acquired, which is collected by a first gyro sensor of the electronic device.

In step 303, a second control instruction from the handle is received and a second time point of receiving the second control instruction is determined.

In step 304, the acquisition of the sensor data from the first gyro sensor is stopped, and then the acquisition of the sensor data within the set time period is completed.

In an exemplary scenario, as shown in FIG. 1B, when the user presses the button 121 on the handle 12, the handle 12 generates a first control instruction. The electronic equipment 13 receives the first control instruction via blue tooth and determines the first time point at which the first control instruction is received. Since the electronic equipment 13 is mounted on the VR wearable device 11 and acts as a VR display device, the first gyro sensor on the electronic equipment 13 can collect the sensor data about the movement of the VR wearing device 11 moving in the three-dimensional space when the user wears the VR wearable device 11. When the user releases the button 121, the handle 12 generates a second control command, and the electronic equipment 13 stops receiving the sensor data from the first gyro sensor upon receipt of the second control instruction from the handle 12, and then the acquisition of the sensor data within the set time period is completed.

In the present embodiment, the movement of the VR wearable device that is moved by the user is controlled by triggering a button on the handle. Since only one button on the handle is needed to assist in the implementation of the control of the VR execution device, the design of the handle is simplified and the hardware cost is reduced. By utilizing the first gyro sensor inherent in the electronic equipment, the hardware configuration of the VR wearable device can be simplified, and the hardware cost of the VR wearable device can be reduced.

Figure 4 is a schematic flow chart of a VR control method according to a third exemplary embodiment. In the third embodiment, the above-described method provided by the embodiments of the present disclosure will be further described. An exemplary explanation of how to collect sensor data from a second gyro sensor of a VR wearable device will be provided as an example with reference to Fig. 1C. As shown in Fig.4, the method includes:

In step 401, upon detection of a predetermined button on the VR wearable device is triggered, a first control instruction is generated, and a first time point that the first control instruction is generated is determined.

In step 402, the sensor data indicative of the movement of the VR wearable device in the three-dimensional space, is collected by the second gyroscope of the VR wearable device according to the first control instruction.

In step 403, when it is detected that the predetermined button is triggered again, a second control instruction is generated and a second time point at which the second control instruction is generated is determined.

In step 404, according to the second control instruction, the acquisition of the sensor data from the second gyro sensor is stopped, and then the sensor data within the set time period is acquired completely.

In an exemplary scenario, as shown in FIG. 1C, when the user presses the predetermined button 14 on the VR wearable device 11, the VR wearable device 11 generates a first control instruction and determined a first time point at which the first control instruction is generated. In the case that the VR wearable device 11 is integrated with the VR display device and the VR wearable device 11 is equipped with a second gyro sensor, when the user wearing the VR wearable device 11 moves, the sensor data about the movement of the VR wearable device 11 in three-dimensional space can be collected by the second gyro sensor provided on the VR wearable device 11. When the user releases the predetermined button 14, the VR wearable device 11 generates a second control instruction to stop the acquisition of the sensor data from the second gyro sensor and then the acquisition of the sensor data within the set time period is completed.

In the present embodiment, since the VR wearable device is integrated with the VR display device and the VR wearable device 11 is equipped with the second gyro sensor, it is possible to avoid excessive interaction between the VR wearable device and the electronic equipment, and thus the efficiency of control operation of the VR wearable device and operability are improved.

Figure 5 is a structural diagram of a VR control apparatus according to an exemplary embodiment. As shown in Fig.5, the VR control apparatus includes:
a data acquisition module 51, configured to acquire sensor data within a set time period in which a VR wearable device is moved in three-dimensional space, and the set time period is determined by a first time point at which a first control instruction is received and a second time point at which a second control instruction is received;
a trajectory determination module 52, configured to determine a moving trajectory of the VR wearable device within the set time period based on the sensor data within the set time period; and
an operation control module 53, configured to control a VR execution device to perform operations corresponding to the moving trajectory and to display operation effects corresponding to the moving trajectory on the VR display device.

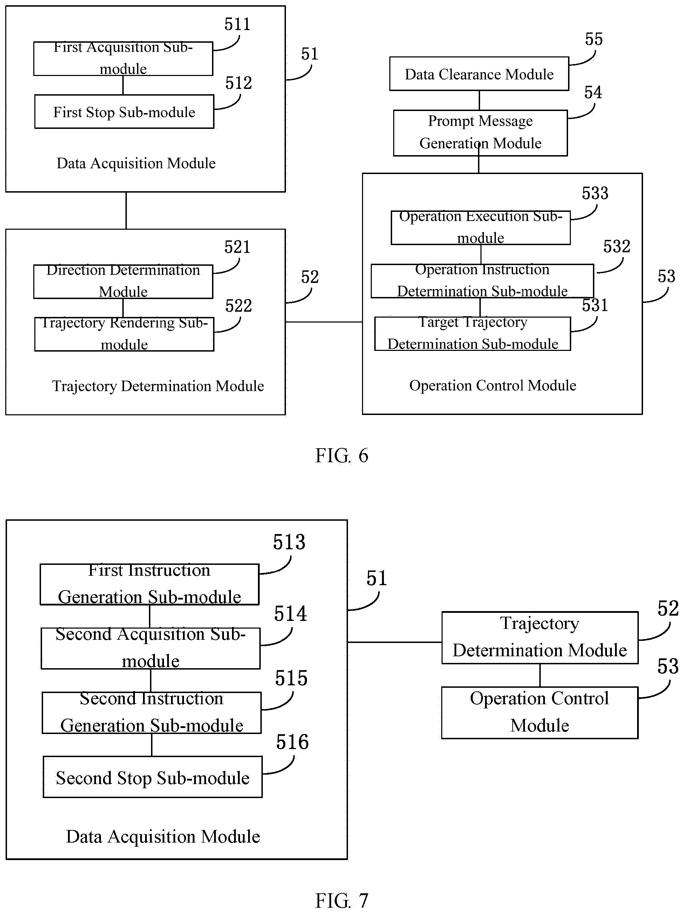

Figure 6 is a structural diagram of another VR control apparatus in accordance with an exemplary embodiment. In one embodiment, the trajectory determination module 52 may include:
a direction determination module 521, configured to determine a moving direction in which the VR wearable device moves in the three-dimensional space based on sensor data within the set time period; and
a trajectory rendering sub-module 522, configured to render the moving trajectory of the VR wearable device on the VR display device based on the sensor data within the set time period in the direction chronologically and along the direction determined by the direction determination module 521.

In one embodiment, the trajectory rendering sub-module 522 is configured to:
at the first time point, render a first set of sensor data in the sensor data within the set time period in a central region of the VR display device;
render the moving trajectory corresponding to the sensor data within the set time period chronologically along the direction;
at the second time point, render the last set of sensor data among the sensor data within the set time period in the central region of the VR display device, and said rendering the moving trajectory of the VR wearable device is completed.

In one embodiment, the operation control module 53 includes:
a target trajectory determination sub-module 531, configured to determine a target trajectory matching the shape of the moving trajectory from a plurality of reference trajectories corresponding to an operation instruction for controlling the VR execution device;
an operation instruction determination sub-module 532, configured to determine an operation instruction corresponding to the target trajectory determined by the target trajectory determination sub-module 531; and
an operation execution sub-module 533, configured to control the VR execution device to perform an operation corresponding to the operation instruction determined by the operation instruction determination sub-module 532.

In one embodiment, the device may further includes:
a prompt message generation module 54, configured to generate a message for prompting the user to move the VR wearable device once again, if it is determined that there isn't a target trajectory from the plurality of reference trajectories; and
a data clearance module 55, configured to clear the sensor data within the set time period, after the prompt message generation module 54 has generated the prompt message.

In one embodiment, the data acquisition module may include:
a first acquisition sub-module 511, configured to acquire the sensor data of the electronic device indicating a movement of the VR wearable device in the three-dimensional space from a first gyro sensor, when receiving the first control instruction from the handle bounded to the VR wearable device;
a first stop sub-module 512, configured to, upon receipt of the second control instruction from the handle, stop acquiring sensor data from the first gyro sensor, and completing the acquisition of the sensor data within the preset period of time.

Figure 7 is a structural diagram of a further VR control apparatus according to an exemplary embodiment. As shown in Fig.7, on the basis of the embodiment shown in Fig.5, in one embodiment, the data acquisition module 51 may include:
a first instruction generation sub-module 513, configured to generate the first control instruction and determining the first time point at which the first control instruction is generated, when it is detected that a predetermined button on the VR wearable device is triggered;
a second acquisition sub-module 514, configured to acquire the sensor data indicative of the movement of the VR wearable device in three-dimensional space which is captured by the second gyroscope of the VR wearable device according to the first control instruction;
a second instruction generation sub-module 515, configured to generate the second control instruction when it is detected that the predetermined button is triggered again; and
a second stop sub-module 516, configured to stop acquiring the sensor data from the second gyro sensor according to the second control instruction generated by the second instruction generation sub-module 515, so as to complete the acquisition of the sensor data within the set time period.

With respect to the apparatus in the above embodiment, the specific mode in which each module performs the operation has been described in details in the embodiment relating to the method as discussed above, and therefore the description thereof will not be described in details here.

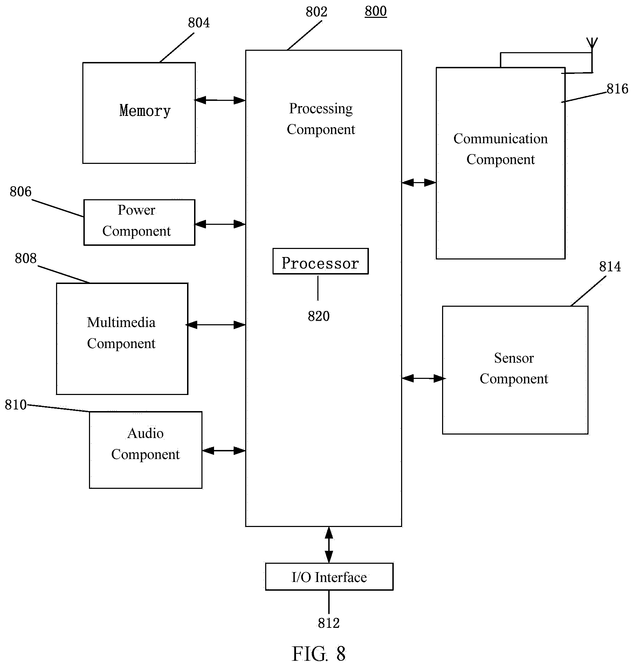

Figure 8 is a block diagram of another device that is suitable for controlling a VR device according to an exemplary embodiment. For example, the device 800 may be implemented with an electronic equipment, such as an intelligent device, a VR device (helmet), or the like.

Referring to Fig. 8, the device 800 may include one or more components: a processing component 802, memory 804, a power component 806, a multimedia component 808, an audio component 810, an input/output (I/O) interface 812, a sensor component 814, and a communication component 816.

The processing component 802 generally controls the overall operation of the device 800, such as, operations associated with display, phone call, data communication, camera operation, and recording operations. The processing unit 802 may include one or more processors 820 for executing instructions to complete all or part of the steps of the method described above. In addition, the processing component 802 may include one or more modules to facilitate the interaction between the processing component 802 and other components. For example, the processing component 802 may include a multimedia module , so as to facilitate the interaction between the multimedia component 808 and the processing component 802.

The memory 804 is configured to store various types of data to support operations of the device 800. Examples of such data include instructions, contact data, phonebook data, messages, pictures, videos, and the like for any application or method that operates on the device 800. The memory 804 may be implemented as any type of volatile or nonvolatile memory device or a combination thereof, such as, static random access memory (SRAM), electrically erasable programmable read only memory (EEPROM), erasable Programmable read only memory (EPROM), programmable read only memory (PROM), read only memory (ROM), magnetic memory, flash memory, disk or CD.

The power component 806 provides power for the various components of the device 800. The power component 806 may include a power management system, one or more power supplies, and other components associated with functions of generating, managing, and distributing power for the device 800.

The multimedia component 808 includes a screen that provides an output interface between the device 800 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors for sensing touch, slide, and gestures on the touch panels. The touch sensor can sense not only the boundary of the touch or slide action but also the duration and pressure associated with the touch or slide operation. In some embodiments, the multimedia component 808 includes a front camera and/or a rear camera. The front camera and/or rear camera can receive external multimedia data when the device 800 is in an operating mode, such as, a shooting mode or a video mode. Each of the front camera and rear camera can be a fixed optical lens system or a zoom optical lens system.

The audio component 810 is configured to output and/or input an audio signal. For example, the audio component 810 includes a microphone (MIC) that is configured to receive an external audio signal when the device 800 is in an operating mode, such as a call mode, a recording mode, and a voice recognition mode. The received audio signal may be further stored in the memory 804 or transmitted via the communication component 816. In some embodiments, the audio component 810 may further include a loudspeaker for outputting audio signals.

The I/O interface 812 provides an interface between the processing component 802 and the peripheral interface module, wherein the peripheral interface module may be a keyboard, a click wheel, a button, or the like. These buttons may include, but are not limited to, a home button, a volume button, a start button, and a lock button.

The sensor component 814 includes one or more sensors for providing conditional assessments of various aspects of the device 800. For example, the sensor component 814 may detect the open/closed state of the device 800, the relative positioning of the components, for example, the component may be the display and keypad of the device 800. The sensor component 814 may also detect a change in the location of the device 800 or a component of the device 800, the presence or absence of the user's contact with the device 800, orientation or acceleration/deceleration of the device 800 and the temperature change of the device 800. The sensor component 814 may include a proximity sensor configured to detect the presence of a nearby object without any physical contact. The sensor component 814 may also include a light sensor, such as a CMOS or CCD image sensor, for use in imaging applications. In some embodiments, the sensor component 814 may also include an acceleration sensor, a gyro sensor, a magnetic sensor, a pressure sensor, or a temperature sensor.

The communication component 816 is configured to facilitate wired or wireless communication between the device 800 and other devices. The device 800 may access a wireless network based on a communication standard, such as WiFi, 2G or 3G, or a combination thereof. In an exemplary embodiment, the communication component 816 receives a broadcast signal or broadcast-related information from an external broadcast management system via a broadcast channel. In an exemplary embodiment, the communication component 816 may also include a near field communication (NFC) module to facilitate short-range communication. For example, the NFC module may be implemented based on radio frequency identification (RFID) technology, infrared data association (IrDA) technology, ultra wideband (UWB) technology, Bluetooth (BT) technology and other techniques.

In an exemplary embodiment, the device 800 may be implemented with one or more application specific integrated circuits (ASICs), digital signal processors (DSPs), digital signal processing devices (DSPDs), programmable logic devices (PLDs), field programmable A gate array (FPGA), a controller, a microcontroller, a microprocessor, or other electronic component for performing the VR control method described above, the method comprising:
acquiring sensor data indicative of a movement of a VR wearable device in three-dimensional space within a set time period, and the set time period is determined by a first time point at which a first control instruction is received and a second time point at which a second control instruction is received; determining a moving trajectory of the VR wearable device within the set time period based on the sensor data within the set time period; and controlling a VR execution device to perform operations corresponding to the moving trajectory and to display operation effects corresponding to the moving trajectory on the VR display device.

In an exemplary embodiment, there is also provided a non-temporary computer readable storage medium comprising instructions, such as a memory 804 that includes instructions, which may be executed by the processor 820 of the device 800 to perform the method described above. For example, non-temporary computer-readable storage media may be selected from ROM, random access memory (RAM), CD-ROM, magnetic tape, floppy disk, optical data storage device, and the like. The processor 820 is configured to:
acquiring sensor data indicative of a movement of a VR wearable device in three-dimensional space within a set time period, and the set time period is determined by a first time point at which a first control instruction is received and a second time point at which a second control instruction is received; determining a moving trajectory of the VR wearable device within the set time period based on the sensor data within the set time period; and controlling a VR execution device to perform operations corresponding to the moving trajectory and to display operation effects corresponding to the moving trajectory on the VR display device.

Other embodiments of the present disclosure will be readily apparent to those skilled in the art upon consideration of the specification and practice of the disclosure disclosed herein. The present application is intended to cover any variations, uses, or adaptations of the present disclosure that follow the general principles of the present disclosure and include common knowledge or conventional technical means in the art without departing from the present disclosure The specification and examples are to be regarded as illustrative only, and the protective scope of the disclosure are defined by the following claims.

It is to be understood that this disclosure is not limited to the precise constructions described above and shown in the drawings, and that various modifications and changes may be made without departing from the scope thereof. The scope of the present invention is only defined by the appended claims.

## Claims

1. A virtual reality (VR) control method comprising:
acquiring sensor data indicative of a movement of a VR wearable device (11) in three-dimensional space;
determining a moving trajectory of the VR wearable device (11) and rendering the moving trajectory on a VR display device (103) based on the sensor data (102); and controlling a VR execution device to perform an operation corresponding to the moving trajectory and to display operation effects corresponding to the moving trajectory on the VR display device (103), wherein the sensor data indicative of the movement of the VR wearable device (1) in three-dimensional space are acquired within a set time period, and the set time period is determined by a first time point at which a first control instruction is received and a second time point at which a second control instruction is received (101, 201); wherein
the moving trajectory of the VR wearable device (11) based on the sensor data acquired within the set time period is determined within the set time period,
wherein said acquiring sensor data indicative of the movement of the VR wearable device (11) in three-dimensional space within the set time period includes:
upon receipt of the first control instruction from a handheld handle (12) bound to the VR wearable device (11), acquiring the sensor data indicative of the movement of the VR wearable device (11) in the three-dimensional space from a first gyro sensor of the electronic device; and
upon receipt of the second control instruction from the handle (12), stopping acquiring sensor data from the first gyro sensor, and the acquisition of the sensor data within the preset period of time being completed, wherein said controlling the VR execution device to perform the operation corresponding to the moving trajectory includes:
determining whether there is a target trajectory from a plurality of reference trajectories matching the shape of the moving trajectory, the target trajectory corresponding to an operation instruction for controlling the VR execution device (204);
determining an operation instruction corresponding to the target trajectory (205); and
controlling the VR execution device to perform the operation corresponding to the operation instruction (206).

2. The method according to claim 1, wherein said determining a moving trajectory of the VR wearable device (11) within the set time period based on the sensor data within the set time period (101) includes:
determining a moving direction in which the VR wearable device (11) moves in the three-dimensional space based on sensor data within the set time period (202); and
rendering the moving trajectory of the VR wearable device (11) on the VR display device based on the sensor data within the set time period along the moving
direction chronologically (203).

3. The method according to claim 2, wherein said rendering the moving trajectory of the VR wearable device on the VR display device based on the sensor data within the set time period in the moving direction chronologically includes:
at the first time point, rendering a first set of sensor data among the sensor data within the set time period in a central region of the VR display device (211);
rendering the moving trajectory corresponding to the sensor data within the set time period chronologically along the moving direction (212); and
at the second time point, rendering the last set of sensor data among the sensor data within the set time period in the central region of the VR display device, and said rendering the moving trajectory of the VR wearable device (11) is completed (213).

4. The method according to claim 3, further comprising:
generating a message for prompting to move the VR wearable device (11) once again if it is determined that there isn't a target trajectory from the plurality of reference trajectories (207); and
clearing the sensor data within the set time period (208).

5. A VR control apparatus comprising:
a data acquisition module (51) configured to acquire sensor data indicative of a movement of a VR wearable device (11) in three-dimensional space;
a trajectory determination module (52) configured to determine a moving trajectory of the VR wearable device (11) and to render the moving trajectory on a VR display device
based on the sensor data; and
an operation control module (53) configured to control a VR execution device to perform an operation corresponding to the moving trajectory and to display operation effects corresponding to the moving trajectory on the VR display device, wherein
the data acquisition module (51) is configured to acquire the sensor data indicative of the movement of a VR wearable device (11) in three-dimensional space within a set time period, and the set time period is determined by a first time point at which a first control instruction is received and a second time point at which a second control instruction is received; wherein the trajectory determination module (52) is configured to determine the moving trajectory of the VR wearable device (11) within the set time period based on the sensor data within the set time period;
wherein said data acquisition module (51) includes:
a first acquisition sub-module (51) configured to acquire the sensor data indicative of a movement of the VR wearable device (11) in the three-dimensional space from a first gyro sensor of the VR wearable device (11), upon receipt of the first control instruction from a handheld handle bound to the VR wearable device (11);
a first stop sub-module (512) configured to, upon receipt of the second control instruction from the handle, stop acquiring sensor data from the first gyro sensor and the acquisition of the sensor data within the preset period of time is completed,
wherein said operation control module (53) includes:
a target trajectory determination sub-module (531) configured to determine a target trajectory from a plurality of reference trajectories matching the shape of the moving trajectory, the target trajectory corresponding to an operation instruction for controlling the VR execution device;
an operation instruction determination sub-module (532) configured to determine the operation instruction corresponding to the target trajectory; and
an operation execution sub-module (533) configured to control the VR execution device to perform an operation corresponding to the operation instruction.

6. The VR control apparatus according to claim 5, wherein said trajectory determination module (52) includes:
a direction determination module (521) configured to determine a moving direction in which the VR wearable device (11) moves in the three-dimensional space based on sensor data within the set time period; and
a trajectory rendering sub-module (522) configured to render the moving trajectory of the VR wearable device (11) on the VR display device based on the sensor data within the set time period in the moving direction chronologically.

7. The VR control apparatus according to claim 6, wherein said trajectory rendering sub-module (522) is configured to:
at the first time point, render a first set of sensor data among the sensor data within the set time period in a central region of the VR display device;
render the moving trajectory corresponding to the sensor data within the set time period chronologically along the moving direction;
at the second time point, render the last set of sensor data among the sensor data within the set time period in the central region of the VR display device, and said rendering the moving trajectory of the VR wearable device (11) is completed.

8. The VR control apparatus according to claim 7, further comprising:
a prompt message generation module (54) configured to generate a message for prompting to move the VR wearable device (11) once again if it is determined that there isn't a target trajectory from the plurality of reference trajectories; and
a data clearance module (55) configured to clear the sensor data within the set time period after the prompt message generation module generates the message.

9. The VR control apparatus according to any one of claims 5-8, wherein said data acquisition module (51) includes:
a first instruction generation sub-module (513) configured to generate the first control instruction and to determine the first time point at which the first control instruction is generated, when it is detected that a predetermined button on the VR wearable device (11) is triggered;
a second acquisition sub-module (514) configured to acquire the sensor data indicative of the movement of the VR wearable device (11) in three-dimensional space from a second gyro sensor of the VR wearable device (11) according to the first control instruction;
a second instruction generation sub-module (515) configured to generate the second control instruction and to determine the second time point at which the second control instruction is generated, when it is detected that the predetermined button is triggered again; and
a second stop sub-module (516) configured to stop acquiring the sensor data from the second gyro sensor according to the second control instruction, and the acquisition of the sensor data within the set time period is completed.

## Patentansprüche

1. Virtual-Reality (VR)-Steuerungsverfahren, das umfasst:
Erfassen von Sensordaten, die eine Bewegung einer tragbaren VR-Vorrichtung (11) im dreidimensionalen Raum anzeigen;
Bestimmen einer Bewegungsbahn der tragbaren VR-Vorrichtung (11) und Rendern bzw. Darstellen der Bewegungsbahn auf einer VR-Anzeigevorrichtung (103) auf der Grundlage der Sensordaten (102); und
Steuern einer VR-Ausführungsvorrichtung, um eine der Bewegungsbahn entsprechende Operation bzw. Bedienung durchzuführen und um Bedienungs- bzw. Operationseffekte entsprechend der Bewegungsbahn auf der VR-Anzeigevorrichtung (103) anzuzeigen, wobei die Sensordaten, die die Bewegung der tragbaren VR-Vorrichtung (1) im dreidimensionalen Raum anzeigen, innerhalb einer eingestellten Zeitperiode erfasst werden, und die eingestellte Zeitperiode durch einen ersten Zeitpunkt, zu dem ein erster Steuerbefehl empfangen wird, und einen zweiten Zeitpunkt, zu dem ein zweiter Steuerbefehl empfangen (101, 201) wird, bestimmt wird; wobei
die Bewegungsbahn der tragbaren VR-Vorrichtung (11) basierend auf den innerhalb der eingestellten Zeitperiode erfassten Sensordaten innerhalb der eingestellten Zeitperiode bestimmt wird,
wobei das Erfassen von Sensordaten, die die Bewegung der tragbaren VR-Vorrichtung (11) im dreidimensionalen Raum innerhalb der eingestellten Zeitperiode anzeigen, umfasst:
bei Empfang des ersten Steuerbefehls von einem an die tragbare VR-Vorrichtung (11) gebundenen Handgriff (12), Erfassen der Sensordaten, die die Bewegung der tragbaren VR-Vorrichtung (11) im dreidimensionalen Raum anzeigen, von einem ersten Gyrosensor der elektronischen Vorrichtung; und
bei Empfang des zweiten Steuerbefehls vom Handgriff (12) Stoppen der Erfassung von Sensordaten vom ersten Gyrosensor und Fertigstellen der Erfassung der Sensordaten innerhalb der vorgegebenen Zeitspanne,
wobei die Steuerung der VR-Ausführungsvorrichtung zur Durchführung der Operation, die der Bewegungsbahn entspricht, umfasst:
Bestimmen, ob es eine Zielbahn aus einer Vielzahl von Referenzbahnen gibt, die mit der Form der Bewegungsbahn übereinstimmen, wobei die Zielbahn einem Operationsbefehl zur Steuerung der VR-Ausführungsvorrichtung (204) entspricht;
Bestimmen eines Operationsbefehls, der der Zielbahn entspricht (205); und
Steuern der VR-Ausführungsvorrichtung, um die Operation, die dem Operationsbefehl (206) entspricht durchzuführen.

2. Verfahren nach Anspruch 1, wobei das Bestimmen einer Bewegungsbahn der tragbaren VR-Vorrichtung (11) innerhalb der eingestellten Zeitperiode basierend auf den Sensordaten innerhalb der eingestellten Zeitperiode (101) umfasst:
Bestimmen einer Bewegungsrichtung, in der sich die tragbare VR-Vorrichtung (11) im dreidimensionalen Raum bewegt, basierend auf den Sensordaten innerhalb der eingestellten Zeitperiode (202); und
Darstellen der Bewegungsbahn der tragbaren VR-Vorrichtung (11) auf der VR-Anzeigevorrichtung basierend auf den Sensordaten innerhalb der eingestellten Zeitperiode entlang der Bewegungsrichtung chronologisch (203).

3. Verfahren nach Anspruch 2, wobei das Darstellen der Bewegungsbahn der tragbaren VR-Vorrichtung auf der VR-Anzeigevorrichtung basierend auf den Sensordaten innerhalb der eingestellten Zeitperiode in der Bewegungsrichtung chronologisch umfasst:
zum ersten Zeitpunkt, Darstellen eines ersten Satzes von Sensordaten unter den Sensordaten innerhalb der eingestellten Zeitperiode in einem zentralen Bereich der VR-Anzeigevorrichtung (211);
Darstellen der Bewegungsbahn, die den Sensordaten innerhalb der eingestellten Zeitperiode entspricht, chronologisch entlang der Bewegungsrichtung (212); und
zum zweiten Zeitpunkt, Darstellen des letzten Satzes von Sensordaten unter den Sensordaten innerhalb der eingestellten Zeitperiode in dem zentralen Bereich der VR-Anzeigevorrichtung, und das Darstellen der Bewegungsbahn der tragbaren VR-Vorrichtung (11) ist abgeschlossen (213).

4. Verfahren nach Anspruch 3, das ferner umfasst:
Erzeugen einer Nachricht zur Aufforderung, die tragbare VR-Vorrichtung (11) noch einmal zu bewegen, wenn festgestellt wird, dass es keine Zielbahn aus der Vielzahl von Referenzbahnen (207) gibt; und
Löschen der Sensordaten innerhalb der eingestellten Zeitspanne (208).

5. VR-Steuergerät, das umfasst:
ein Datenerfassungsmodul (51), das eingerichtet ist, Sensordaten zu erfassen, die eine Bewegung einer tragbaren VR-Vorrichtung (11) im dreidimensionalen Raum anzeige;
ein Bahnbestimmungsmodul (52), das eingerichtet ist, eine Bewegungsbahn der tragbaren VR-Vorrichtung (11) zu bestimmen und die Bewegungsbahn auf einer VR-Anzeigevorrichtung basierend auf den Sensordaten darzustellen; und
ein Operationssteuermodul (53), das eingerichtet ist, eine VR-Ausführungsvorrichtung zu steuern, um eine der Bewegungsbahn entsprechende Operation durchzuführen und um Operationseffekte entsprechend der Bewegungsbahn auf der VR-Anzeigevorrichtung anzuzeigen, wobei
das Datenerfassungsmodul (51) eingerichtet ist, um die Sensordaten zu erfassen, die die Bewegung einer tragbaren VR-Vorrichtung (11) im dreidimensionalen Raum innerhalb einer eingestellten Zeitperiode anzeigen, und die eingestellte Zeitperiode durch einen ersten Zeitpunkt, zu dem ein erster Steuerbefehl empfangen wird, und einen zweiten Zeitpunkt, zu dem ein zweiter Steuerbefehl empfangen wird, bestimmt wird;
wobei das Bahnbestimmungsmodul (52) eingerichtet ist, die Bewegungsbahn der tragbaren VR-Vorrichtung (11) innerhalb der eingestellten Zeitperiode basierend auf den Sensordaten innerhalb der eingestellten Zeitperiode zu bestimmen;
wobei das Datenerfassungsmodul (51) umfasst:
ein erstes Erfassungssubmodul (51), das eingerichtet ist, die Sensordaten, die die Bewegung der tragbaren VR-Vorrichtung (1) im dreidimensionalen Raum anzeigen, von einem ersten Gyrosensor der tragbaren VR-Vorrichtung (11), bei Empfang des ersten Steuerbefehls von einem an die tragbare VR-Vorrichtung (11) gebundenen Handgriff (12), zu erfassen;
ein erstes Beendigungssubmodul (512) das eingerichtet ist, bei Empfang des zweiten Steuerbefehls vom Handgriff, die Erfassung von Sensordaten vom ersten Gyrosensor und zu stoppen und die Erfassung der Sensordaten innerhalb der vorgegebenen Zeitspanne zu beenden,
wobei das Operationssteuermodul (53) umfasst:
ein Zielbahnsubmodul (531) das eingerichtet ist, eine Zielbahn aus einer Vielzahl von Referenzbahnen zu bestimmen, die mit der Form der Bewegungsbahn übereinstimmen, wobei die Zielbahn einem Operationsbefehl zur Steuerung der VR-Ausführungsvorrichtung entspricht;
ein Operationsbefehlsbestimmungssubmodul (532) das eingerichtet ist, einen Operationsbefehl, der der Zielbahn entspricht, zu bestimmen; und
ein Operationsausführungssubmodul (533), das eingerichtet ist, die VR-Ausführungsvorrichtung zu steuern, um die Operation, die dem Operationsbefehl entspricht, durchzuführen.

6. VR-Steuergerät nach Anspruch 5, wobei das Bahnbestimmungsmodul (52) umfasst:
ein Richtungsbestimmungsmodul (521), das eingerichtet ist, eine Bewegungsrichtung, in die sich die tragbare VR-Vorrichtung (11) im dreidimensionalen Raum bewegt, basierend auf Sensordaten innerhalb der eingestellten Zeitperiode, zu bestimmen; und
ein Bahndarstellungssubmodul (522), das eingerichtet ist, die Bewegungsbahn der tragbaren VR-Vorrichtung (11) auf der VR-Anzeigevorrichtung basierend auf den Sensordaten innerhalb der eingestellten Zeitperiode in der Bewegungsrichtung chronologisch darzustellen.

7. VR-Steuergerät nach Anspruch 6, wobei das Bahndarstellungssubmodul (522) eingerichtet ist:
zum ersten Zeitpunkt, einen ersten Satz von Sensordaten unter den Sensordaten innerhalb der eingestellten Zeitperiode in einem zentralen Bereich der VR-Anzeigevorrichtung (211) darzustellen;
Darstellen der Bewegungsbahn, die den Sensordaten innerhalb der eingestellten Zeitperiode entspricht, chronologisch entlang der Bewegungsrichtung;
zum zweiten Zeitpunkt, den letzten Satz von Sensordaten unter den Sensordaten innerhalb der eingestellten Zeitperiode in dem zentralen Bereich der VR-Anzeigevorrichtung darzustellen, und das Darstellen der Bewegungsbahn der tragbaren VR-Vorrichtung (11) ist abgeschlossen (213).

8. VR-Steuergerät nach Anspruch 7, das ferner umfasst:
ein Aufforderungsnachrichten-Erzeugungsmodul (54), das eingerichtet ist, eine Nachricht zur Aufforderung, die tragbare VR-Vorrichtung (11) noch einmal zu bewegen, zu erzeugen, wenn festgestellt wird, dass es keine Zielbahn aus der Vielzahl von Referenzbahnen gibt; und
ein Datenlöschmodul (55), das eingerichtet ist, die Sensordaten innerhalb der eingestellten Zeitspanne, nachdem das Aufforderungsnachrichten-Erzeugungsmodul die Nachricht erzeugt, zu löschen.

9. VR-Steuergerät nach einem der Ansprüche 5-8, wobei das Datenerfassungsmodul (51) umfasst:
ein erstes Befehlserzeugungssubmodul (513) das eingerichtet ist, einen ersten Steuerbefehl zu erzeugen und einen ersten Zeitpunkt zu bestimmen, zu dem der erste Steuerbefehl erzeugt wird, wenn detektiert wird, dass ein vorbestimmter Schalter oder Knopf an der tragbaren VR-Vorrichtung (11) ausgelöst wird;
ein zweites Erfassungssubmodul (514), das eingerichtet ist, die Sensordaten, die die Bewegung der tragbaren VR-Vorrichtung (1) im dreidimensionalen Raum anzeigen, von einem zweiten Gyrosensor der tragbaren VR-Vorrichtung (11), gemäß dem ersten Operationsbefehl zu erfassen;
ein zweites Befehlserzeugungssubmodul (515) das eingerichtet ist, einen zweiten Steuerbefehl zu erzeugen und einen zweiten Zeitpunkt zu bestimmen, zu dem der zweite Steuerbefehl erzeugt wird, wenn detektiert wird, dass ein vorbestimmter Knopf an der tragbaren VR-Vorrichtung (11) erneut ausgelöst wird; und
ein zweites Beendigungssubmodul (516) das eingerichtet ist, die Erfassung von Sensordaten vom zweiten Gyrosensor gemäß dem zweiten Steuerbefehl zu stoppen und die Erfassung der Sensordaten innerhalb der vorgegebenen Zeitspanne zu beenden bzw. ist beendet.

## Revendications

1. Une méthode de contrôle de la réalité virtuelle (RV) comprenant :
l'acquisition de données de capteurs indiquant un mouvement d'un dispositif portable de RV (11) dans l'espace tridimensionnel ;
déterminer une trajectoire de déplacement du dispositif portable VR (11) et rendre la trajectoire de déplacement sur un dispositif d'affichage VR (103) sur la base des données du capteur (102) ; et
commander un dispositif d'exécution de RV pour effectuer une opération correspondant à la trajectoire de déplacement et pour afficher les effets de l'opération correspondant à la trajectoire de déplacement sur le dispositif d'affichage de RV (103), dans lequel les données du capteur indiquant le mouvement du dispositif portable VR (1) dans l'espace tridimensionnel sont acquises dans une période de temps définie, et la période de temps définie est déterminée par un premier point temporel auquel une première instruction de commande est reçue et un second point temporel auquel une seconde instruction de commande est reçue (101, 201) ; dans lequel
la trajectoire mobile du dispositif portable VR (11), basée sur les données du capteur acquises dans la période de temps fixée, est déterminée dans la période de temps fixée,
dans lequel ladite acquisition de données de capteur indiquant le mouvement du dispositif portable VR (11) dans l'espace tridimensionnel dans la période de temps fixée comprend :
à la réception de la première instruction de commande provenant d'une poignée (12) liée au dispositif portable VR (11), l'acquisition des données du capteur indiquant le mouvement du dispositif poartable VR (11) dans l'espace tridimensionnel à partir d'un premier capteur gyroscopique du dispositif électronique ; et
à la réception de la deuxième instruction de commande de la poignée (12), arrêt de l'acquisition des données du premier capteur gyroscopique, et achèvement de l'acquisition des données du capteur dans la période de temps prédéfinie,
dans lequel ledit contrôle du dispositif d'exécution de la RV pour effectuer l'opération correspondant à la trajectoire de déplacement comprend :
déterminer s'il existe une trajectoire cible parmi une pluralité de trajectoires de référence correspondant à la forme de la trajectoire en mouvement, la trajectoire cible correspondant à une instruction d'opération pour commander le dispositif d'exécution de la RV (204) ;
déterminer une instruction d'opération correspondant à la trajectoire de la cible (205)
contrôler le dispositif d'exécution de la RV pour effectuer l'opération correspondant à l'instruction de fonctionnement (206).

2. Procédé selon la revendication 1, dans lequel ladite détermination d'une trajectoire mobile du dispositif portable VR (11) dans la période de temps définie basée sur les données du capteur dans la période de temps définie (101) comprend :
déterminer une direction de déplacement dans laquelle le dispositif portable VR (11) se déplace dans l'espace tridimensionnel sur la base des données du capteur dans la période de temps fixée (202) ; et
rendre chronologiquement la trajectoire de déplacement du dispositif portable VR (11) sur le dispositif d'affichage VR en fonction des données du capteur dans la période de temps définie le long de la direction de déplacement (203).

3. La méthode selon la revendication 2, dans laquelle ledit rendu de la trajectoire de déplacement du dispositif portable VR sur le dispositif d'affichage VR basé sur les données du capteur dans la période de temps définie dans la direction de déplacement comprend chronologiquement :
au premier point temporel, rendant un premier ensemble de données de capteur parmi les données de capteur dans la période de temps fixée dans une région centrale du dispositif d'affichage VR (211) ;
rendre la trajectoire de déplacement correspondant aux données du capteur dans la période de temps fixée chronologiquement le long de la direction de déplacement (212)
au deuxième point temporel, rendant le dernier ensemble de données de capteur parmi les données de capteur dans la période de temps fixée dans la région centrale du dispositif d'affichage VR, et ledit rendu de la trajectoire mobile du dispositif portable VR (11) est terminé (213).

4. La méthode selon la revendication 3, comprenant en outre :
la génération d'un message pour inciter à déplacer à nouveau le dispositif portable de RV (11) s'il est déterminé qu'il n'y a pas de trajectoire cible parmi la pluralité de trajectoires de référence (207) ; et
l'effacement des données du capteur dans le délai fixé (208).

5. Un appareil de contrôle de la RV comprenant :
un module d'acquisition de données (51) configuré pour acquérir des données de capteurs indiquant un mouvement d'un dispositif portable VR (11) dans l'espace tridimensionnel ;
un module de détermination de la trajectoire (52) configuré pour déterminer une trajectoire mobile du dispositif portable VR (11) et pour rendre la trajectoire mobile sur un dispositif d'affichage VR en fonction des données du capteur ; et
un module de commande d'opération (53) configuré pour commander un dispositif d'exécution VR afin d'effectuer une opération correspondant à la trajectoire de déplacement et pour afficher les effets de l'opération correspondant à la trajectoire de déplacement sur le dispositif d'affichage VR, dans lequel
le module d'acquisition de données (51) est configuré pour acquérir les données du capteur indiquant le mouvement d'un dispositif portable VR (11) dans l'espace tridimensionnel dans une période de temps définie, et la période de temps définie est déterminée par un premier point temporel auquel une première instruction de commande est reçue et un second point temporel auquel une seconde instruction de commande est reçue ;
dans lequel le module de détermination de la trajectoire (52) est configuré pour déterminer la trajectoire de déplacement du dispositif portable VR (11) dans la période de temps définie, sur la base des données du capteur dans la période de temps définie ;
dans lequel ledit module d'acquisition de données (51) comprend
un premier sous-module d'acquisition (51) configuré pour acquérir les données du capteur indiquant un mouvement du dispositif portable VR (11) dans l'espace tridimensionnel à partir d'un premier capteur gyroscopique du dispositif portable VR (11), à la réception de la première instruction de commande d'une poignée portable liée au dispositif portable VR (11) ;
un premier sous-module d'arrêt (512) configuré pour, à la réception de la deuxième instruction de commande de la poignée, arrêter l'acquisition des données du premier capteur gyroscopique et l'acquisition des données du capteur dans la période de temps prédéfinie est terminée,
dans lequel ledit module de contrôle des opérations (53) comprend
un sous-module de détermination de la trajectoire cible (531) configuré pour déterminer une trajectoire cible à partir d'une pluralité de trajectoires de référence correspondant à la forme de la trajectoire en mouvement, la trajectoire cible correspondant à une instruction d'opération pour commander le dispositif d'exécution de la RV ;
un sous-module de détermination de l'instruction d'opération (532) configuré pour déterminer l'instruction d'opération correspondant à la trajectoire de la cible ; et
un sous-module d'exécution d'opération (533) configuré pour contrôler le dispositif d'exécution de la RV afin d'effectuer une opération correspondant à l'instruction d'opération.

6. Appareil de contrôle de la RV selon la revendication 5, dans lequel ledit module de détermination de la trajectoire (52) comprend :
un module de détermination de la direction (521) configuré pour déterminer une direction de déplacement dans laquelle le dispositif portable VR (11) se déplace dans l'espace tridimensionnel sur la base des données du capteur dans la période de temps fixée ; et
un sous-module de rendu de trajectoire (522) configuré pour rendre chronologiquement la trajectoire mobile du dispositif portable VR (11) sur le dispositif d'affichage VR en fonction des données du capteur dans la période de temps définie dans la direction de déplacement.

7. Appareil de contrôle de la RV selon la revendication 6, dans lequel ledit sous-module de rendu de trajectoire (522) est configuré pour :
au premier point temporel, rendre un premier ensemble de données de capteur parmi les données de capteur dans la période de temps définie dans une région centrale du dispositif d'affichage VR ;
rendre la trajectoire de déplacement correspondant aux données du capteur dans la période de temps fixée chronologiquement le long de la direction de déplacement ;
au deuxième point temporel, rendre le dernier ensemble de données de capteur parmi les données de capteur dans la période de temps fixée dans la région centrale du dispositif d'affichage VR, et ledit rendu de la trajectoire mobile du dispositif portable VR (11) est terminé.

8. L'appareil de contrôle de la RV selon la revendication 7, comprenant en outre :
un module de génération de message d'invite (54) configuré pour générer un message pour inciter à déplacer le dispositif portable VR (11) une fois de plus s'il est déterminé qu'il n'y a pas de trajectoire cible parmi la pluralité de trajectoires de référence ; et
un module d'effacement des données (55) configuré pour effacer les données du capteur dans la période de temps définie après que le module de génération de messages rapides a généré le message.

9. L'appareil de contrôle de la RV selon l'une quelconque des revendications 5 à 8, dans lequel ledit module d'acquisition de données (51) comprend :
un sous-module de génération de première instruction (513) configuré pour générer la première instruction de commande et pour déterminer le premier moment où la première instruction de commande est générée, lorsqu'il est détecté qu'un bouton prédéterminé du dispositif portable VR (11) est déclenché ;
un second sous-module d'acquisition (514) configuré pour acquérir les données du capteur indiquant le mouvement du dispositif portable VR (11) dans l'espace tridimensionnel à partir d'un second capteur gyroscopique du dispositif portable VR (11) conformément à la première instruction de commande ;
un sous-module de génération d'une deuxième instruction (515) configuré pour générer la deuxième instruction de commande et pour déterminer le deuxième moment où la deuxième instruction de commande est générée, lorsqu'il est détecté que le bouton prédéterminé est à nouveau déclenché ; et
un second sous-module d'arrêt (516) configuré pour arrêter l'acquisition des données du second capteur gyroscopique conformément à la seconde instruction de commande, et l'acquisition des données du capteur dans le délai fixé est terminée.
